# EUROPEAN PATENT APPLICATION

(11) **EP 4 814 326 A1**
(43) Date of publication of application: **30.09.2026**
(21) Application number: 26166882.6
(22) Date of filing: 23.03.2026
(51) Int. Cl.: F16B 37/12, F16B 39/06

(54) **FOX EAR KEYLOCK INSERT**

(30) Priority: 27.03.2025 US 202519092353
(71) Applicant: RTX Corporation, Farmington, CT 06032 (US)
(72) Inventor: Mattia, Tiffany M., East Haddam, CT, 06423 (US); Kajano, Joseph Michael, Sturbridge, MA, 01566 (US)
(74) Representative: Schmitt-Nilson Schraud Waibel Wohlfrom Patentanwälte Partnerschaft mbB

(57) **Abstract**

A key for a keylock insert including a key body having a key forward end opposite a key aft end; the key body has a base side and an interference side opposite the base side; the key body has a first lateral side opposite a second lateral side relative to a key body centerline; the key has a tang portion proximate the key forward end; the key has a double peak portion adjacent the tang portion and proximate the key aft end; the key has a transition region located between the tang portion and the double peak portion; wherein the transition region is configured as a sloped surface; the double peak portion includes a first peak extending from the base side and a second peak adjacent the first peak relative to the key body centerline.

## Description

The present disclosure is directed to the improved key for a key locked insert.

Key locked inserts are used in a variety of parts and materials to provide a strong, permanent metal thread while creating a positive mechanical lock against rotation.

Previously utilized key locked insert configurations utilize nickel alloy for the keys. For parent part materials softer than HRC 30, these inserts utilize an installation method called self-broaching where the keys are driven down into the parent material either manually or via pneumatic gun method. For harder parent part materials, over HRC 30, it may be required to first broach the hole, (pre-broach) for the keys to install properly.

Pre-broaching for harder materials decreases the overall effectiveness of the key lock insert by adding relative motion to what is intended to be an anti-rotation feature. Previous inserts are designed to be installed via self-broaching, but due to the current materials and the profile of the key, they cannot be installed using this method in harder material hardware.

In accordance with the present disclosure, there is provided a key for a keylock insert comprising a key body comprising a key forward end opposite a key aft end; the key body comprises a base side and an interference side opposite the base side; the key body comprises a first lateral side opposite a second lateral side relative to a key body centerline; the key comprises a tang portion proximate the key forward end; the key comprises a double peak portion adjacent the tang portion and proximate the key aft end; the key comprises a transition region located between the tang portion and the double peak portion; wherein the transition region is configured as a sloped surface; the double peak portion includes a first peak extending from the base side and a second peak adjacent the first peak relative to the key body centerline.

Particular embodiments further may include at least one, or a plurality of, the following optional features, alone or in combination with each other:

A further embodiment of any of the foregoing embodiments may additionally and/or alternatively include the key tang portion includes a tang width dimension; the double peak portion includes a peak portion width dimension; wherein the tang width is wider than the peak portion width.

A further embodiment of any of the foregoing embodiments may additionally and/or alternatively include the double peak portion comprises a peak portion height extending from the base side to the interference side.

A further embodiment of any of the foregoing embodiments may additionally and/or alternatively include the double peak portion includes a valley section located between the first peak and the second peak, wherein the valley section is proximate the key body centerline.

A further embodiment of any of the foregoing embodiments may additionally and/or alternatively include the first peak comprises first peak sloped sides each of the first peak sloped sides are configured to converge to a first peak surface; wherein the second peak comprises second peak sloped sides each of the second peak sloped sides are configured to converge to a second peak surface.

A further embodiment of any of the foregoing embodiments may additionally and/or alternatively include the key body is formed from materials comprising a hardness configured to penetrate a parent part material.

A further embodiment of any of the foregoing embodiments may additionally and/or alternatively include the key body comprises a hardness from 53 HRC to 56 HRC.

In accordance with the present disclosure, there is provided a key for a keylock insert and a parent part comprising a parent part bore, the parent part bore comprises an inner diameter wall, the inner diameter wall includes bore threads cut into the inner diameter wall; the insert comprises an insert body having an exterior surface, the insert body being shaped cylindrically with a first end and second end opposite the first end; the insert comprises insert threads formed in the exterior surface; the insert threads are configured to match the bore threads of the parent part bore; the insert body comprises a slot receiver formed within the exterior surface, the slot receiver extends along the insert body from the first end to the second end; and a key body comprising a key forward end opposite a key aft end; the key body comprises a base side and an interference side opposite the base side; the key body comprises a first lateral side opposite a second lateral side relative to a key body centerline; the key comprises a tang portion proximate the key forward end, the tang portion being configured insertable within the slot receiver; the key comprises a double peak portion adjacent the tang portion and proximate the key aft end; the key comprises a transition region located between the tang portion and the double peak portion; wherein the transition region is configured as a sloped surface; the double peak portion includes a first peak extending from the base side and a second peak adjacent the first peak relative to the key body centerline.

Particular embodiments further may include at least one, or a plurality of, the following optional features, alone or in combination with each other:

A further embodiment of any of the foregoing embodiments may additionally and/or alternatively include the slot receiver comprises a dovetail shaped cross-section including a first width wider than a second width, the first width proximate a slot receiver floor formed in the slot receiver, the second width being narrowed proximate the exterior surface distally from the slot receiver floor; wherein the tang portion is configured to insert into the dovetail shaped cross-section.

A further embodiment of any of the foregoing embodiments may additionally and/or alternatively include the key tang portion includes a tang width dimension; the double peak portion includes a peak portion width dimension; wherein the tang width is wider than the peak portion width.

A further embodiment of any of the foregoing embodiments may additionally and/or alternatively include the first peak comprises first peak sloped sides each of the first peak sloped sides are configured to converge to a first peak surface; wherein the second peak comprises second peak sloped sides each of the second peak sloped sides are configured to converge to a second peak surface; wherein the first peak sloped sides and the second peak sloped sides allow for penetration of the double peak portion into the parent part bore.

A further embodiment of any of the foregoing embodiments may additionally and/or alternatively include the transition region sloped surface is configured to angle from the tang top surface upward toward the key aft end, the transition region being configured for the double peak portion to penetrate into the bore threads.

A further embodiment of any of the foregoing embodiments may additionally and/or alternatively include the key body comprises a hardness from 53 HRC to 56 HRC.

In accordance with the present disclosure, there is provided a process for forming a key for a keylock insert and a parent part comprising forming a parent part bore in the parent part, the parent part bore comprises an inner diameter wall, the inner diameter wall includes bore threads cut into the inner diameter wall; forming the insert comprising an insert body having an exterior surface, the insert body being shaped cylindrically with a first end and second end opposite the first end; the insert comprises insert threads formed in the exterior surface; the insert threads are configured to match the bore threads of the parent part bore; forming a slot receiver within the exterior surface, the slot receiver extends along the insert body from the first end to the second end; and forming a key body comprising a key forward end opposite a key aft end; the key body comprises a base side and an interference side opposite the base side; the key body comprises a first lateral side opposite a second lateral side relative to a key body centerline; the key comprises a tang portion proximate the key forward end, the tang portion being configured insertable within the slot receiver; the key comprises a double peak portion adjacent the tang portion and proximate the key aft end; the key comprises a transition region located between the tang portion and the double peak portion; configuring the transition region as a sloped surface; the double peak portion includes a first peak extending from the base side and a second peak adjacent the first peak relative to the key body centerline.

Particular embodiments further may include at least one, or a plurality of, the following optional features, alone or in combination with each other:

A further embodiment of any of the foregoing embodiments may additionally and/or alternatively include the process further comprising forming the slot receiver as a dovetail shaped cross-section including a first width wider than a second width, the first width proximate a slot receiver floor formed in the slot receiver, the second width being narrowed proximate the exterior surface distally from the slot receiver floor; and configuring the tang portion to insert into the dovetail shaped cross-section.

A further embodiment of any of the foregoing embodiments may additionally and/or alternatively include the process further comprising forming the first peak with first peak sloped sides; configuring each of the first peak sloped sides to converge to a first peak surface; forming the second peak with second peak sloped sides; configuring each of the second peak sloped sides to converge to a second peak surface; wherein the first peak sloped sides and the second peak sloped sides allow for penetration of the double peak portion into the parent part bore.

A further embodiment of any of the foregoing embodiments may additionally and/or alternatively include the process further comprising configuring the transition region sloped surface to angle from the tang top surface upward toward the key aft end; and configuring the transition region to guide the double peak portion to penetrate into the bore threads.

A further embodiment of any of the foregoing embodiments may additionally and/or alternatively include the process further comprising forming the double peak portion with a valley section located between the first peak and the second peak, wherein the valley section is proximate the key body centerline.

A further embodiment of any of the foregoing embodiments may additionally and/or alternatively include the process further comprising forming the double peak portion with a peak portion height extending from the base side to the interference side; configuring the peak portion height to penetrate the bore threads.

A further embodiment of any of the foregoing embodiments may additionally and/or alternatively include the key body comprises a hardness from 53 HRC to 56 HRC.

Other details of the key for a key locked insert are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is a schematic representation of an exemplary key being installed between a mating insert and a parent material.
Fig. 2 is a schematic representation of an exemplary insert with associated exemplary keys.
Fig. 3 is a rotated view of the Fig. 2 schematic representation of an exemplary insert with associated exemplary keys.
Fig. 4 is an isometric front view schematic representation of an exemplary key.
Fig. 5 is an isometric rear view schematic representation of the exemplary key.
Fig. 6 is a rear view schematic representation of the exemplary key.

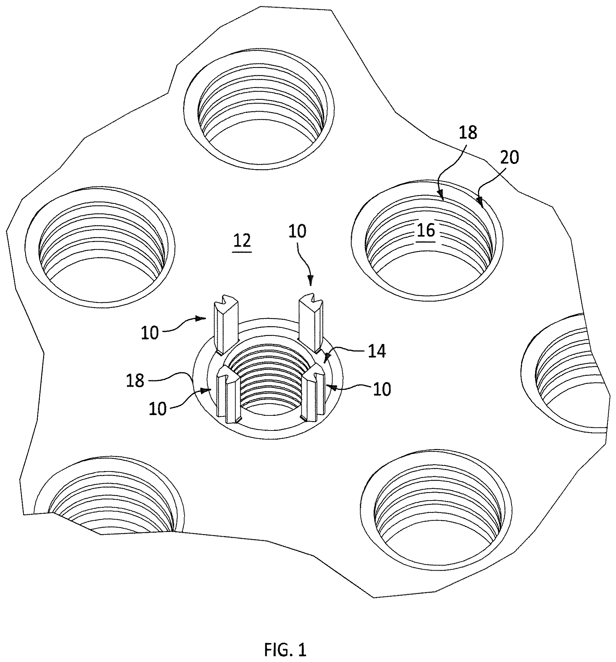

Referring now to Fig. 1, the exemplary key 10 is shown partially inserted between a parent part 12 and an insert 14. The parent part 12 includes a bore 16. The bore 16 includes an inner diameter wall 18. The inner diameter wall 18 includes bore threads 20 cut into the inner diameter wall 18. The bore 16 with bore threads 20 are configured to receive the threadable insertion of the insert 14.

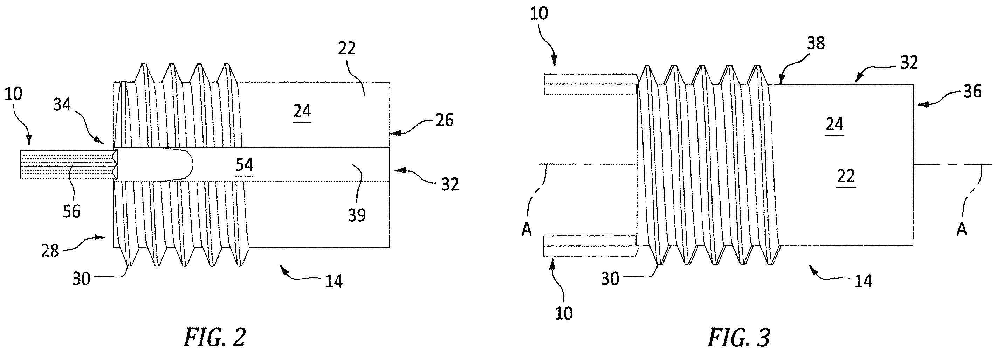

Referring also to Fig. 2 and Fig. 3 the exemplary insert 14 is shown in two views. The exemplary insert 14 includes an insert body 22 with an exterior surface 24. The insert body 22 can be shaped cylindrically with a first end 26 and opposite second end 28. The insert 14 can include insert threads 30 formed into the exterior surface 24. The insert threads 30 can be configured to match the bore threads 20 of the parent part bore 16. The insert body 22 includes a slot receiver 32 formed within the exterior surface 24. The slot receiver 32 extends along the insert body 22 from the first end 26 to the second end 28. The slot receiver 32 can include a dovetail shaped cross-section 34. The dovetail shaped cross-section 34 can include a first width 36 wider than a second width 38. The first width 36 is proximate a slot receiver floor 39. The second width 38 is narrowed proximate the exterior surface 24 distally from the slot receiver floor 39. The slot receiver 32 is configured to receive the key 10 and retain the key 10 such that the key 10 can freely slide into the slot receiver 32 axially without falling out in a radial direction relative to an insert axis A seen in Fig. 3.

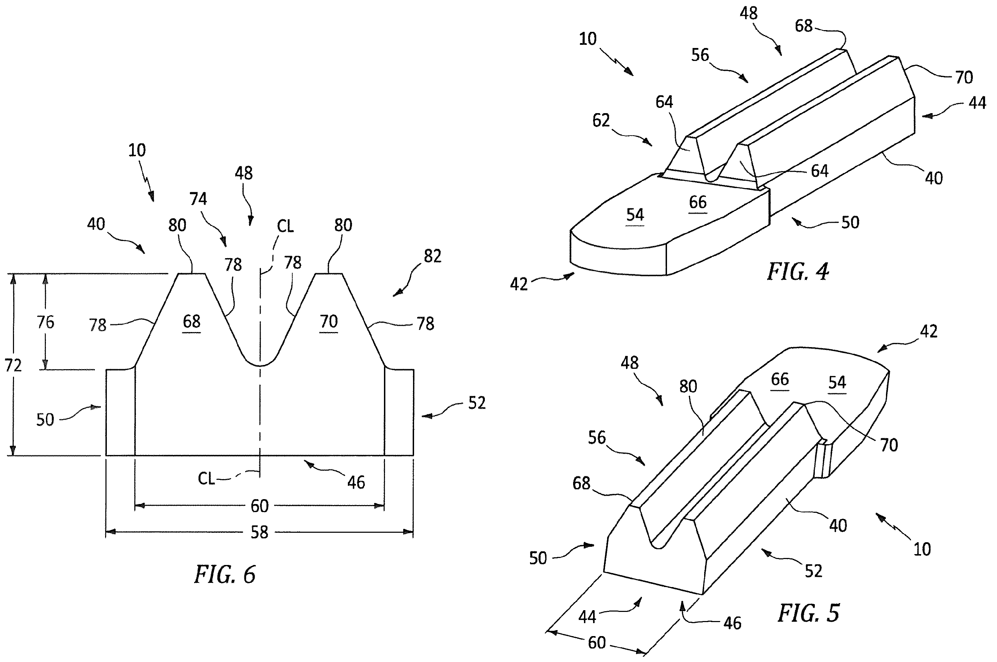

Referring also to Fig. 4, Fig. 5 and Fig. 6 the exemplary key 10 is shown in multiple views. The key 10 includes a key body 40 with a key forward end 42 opposite a key aft end 44. The key body 40 includes a base side 46 and an interference side 48 opposite the base side 46. The base side 46 is configured to slide proximate the slot receiver floor 39. The interference side 48 is configured to contact the bore threads 20 responsive to key 10 insertion. The key body 40 includes a first lateral side 50 opposite a second lateral side 52 relative to a key body centerline CL.

The key 10 includes a tang portion 54. The tang portion 54 is proximate the key forward end 42. The tang portion 54 is configured to be insertable into the slot receiver 32, such that the tang portion 54 is assembled and retained within the slot receiver 32. The key 10 includes a double peak portion 56 adjacent the tang portion 54. The double peak portion 56 is proximate the key aft end 44. The key tang portion 52 includes a tang width 58 dimension. The double peak portion 56 includes a peak portion width 60 dimension. The tang width 58 is wider than the peak portion width 60. The tang width 58 is sized to slide within the slot receiver 32 first width 36. The tang width 58 is sized larger than the slot receiver 32 second width 38 such that the key 10 is radially retained withing the slot receiver 32. The key 10 includes a transition region 62 located between the tang portion 54 and the double peak portion 56. The transition region 62 is configured as a sloped surface 64. The transition region 62 can extend between a tang top surface 66 and the double peak portion 56. The sloped surface 64 is configured to angle from the tang top surface upward toward the key aft end 44 to ease the double peak portion 56 into the bore threads 20.

The double peak portion 56 includes a first peak 68 extending from the base side 46. The double peak portion 56 includes a second peak 70 adjacent the first peak 68 relative to the centerline CL. The double peak portion 56 includes a peak portion height 72 extending from the base side 46 to the interference side 48. The double peak portion 56 includes a valley section 74 located between the first peak 68 and the second peak 70. The valley section 74 can be placed proximate the centerline CL. The valley section 74 can have a valley depth 76 dimension. The valley depth 76 can extend a portion of the peak portion height 72. The peak portion height 72 and the valley depth 76 can be sized to tailor the amount of interference applied by the key 10 to the insert 14 and bore threads 20 of the parent part material 12.

Each of the first peak 68 and second peak 70 can have sloped sides 78. The sloped sides 78 can converge to a peak surface 80. The sloped sides 78 allow for better penetration of the double peak portion 56 into the parent part material 12. The peak surface 80 can be configured to provide a predetermined profile 82 which is lower than previous designs. The predetermined profile 82 allows for better drivability into the parent part material 12. The double peak portion 56 allows for deploying a smaller quantity of material needed to drive into the bore threads 20 of the parent part material 12. The double peak portion 56 first peak 68 and second peak 70 provides greater stability for anti-rotation of the key 10 relative to the slot receiver 32.

The key 10 can be formed from materials that have sufficient hardness and material strength to penetrate the parent part material 12 in the absence of failure. In an exemplary embodiment, the key 10 can be selected from a corrosion resistant steel (CRES) such as a 420 stainless steel. The material can meet an Aerospace Material Specification for steel corrosion resistant bar stock, such as (AMS-QQ-S-763). The key 10 can be heat treated to obtain a hardness from about 53 HRC to about 56 HRC.

A technical advantage of the disclosed key includes a profile modification, along with a harder material configured to prevent commonly experienced assembly issues such as keys breaking or installing improperly.

Another technical advantage of the disclosed key includes a quicker and more efficient means of installing key locked inserts while still providing the required anti-rotation performance.

Another technical advantage of the disclosed key includes a design configure to allow the inserts to be installed without the need of a pre-broach in harder parent part materials.

Another technical advantage of the disclosed key includes a solution to current keylock insert issues by cutting down on time and variances that are seen with current manual pre-broach tooling.

There has been provided a key for keylock inserts. While the key has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A key for a keylock insert comprising:
a key body comprising a key forward end opposite a key aft end; the key body comprises a base side and an interference side opposite the base side; the key body comprises a first lateral side opposite a second lateral side relative to a key body centerline; the key comprises a tang portion proximate the key forward end; the key comprises a double peak portion adjacent the tang portion and proximate the key aft end; the key comprises a transition region located between the tang portion and the double peak portion; wherein the transition region is configured as a sloped surface; the double peak portion includes a first peak extending from the base side and a second peak adjacent the first peak relative to the key body centerline.

2. The key for the keylock insert according to claim 1, wherein the key tang portion includes a tang width dimension; the double peak portion includes a peak portion width dimension; wherein the tang width is wider than the peak portion width.

3. The key for the keylock insert according to claim 1 or 2, wherein the double peak portion comprises a peak portion height extending from the base side to the interference side.

4. The key for the keylock insert according to any of claims 1 to 3, wherein the double peak portion includes a valley section located between the first peak and the second peak, wherein the valley section is proximate the key body centerline.

5. The key for the keylock insert according to any of claims 1 to 4, wherein the first peak comprises first peak sloped sides each of the first peak sloped sides are configured to converge to a first peak surface; wherein the second peak comprises second peak sloped sides each of the second peak sloped sides are configured to converge to a second peak surface.

6. The key for the keylock insert according to any of claims 1 to 5, wherein the key body is formed from materials comprising a hardness configured to penetrate a parent part material.

7. The key for the keylock insert according to any of claims 1 to 6, wherein the key body comprises a hardness from 53 HRC to 56 HRC.

8. A combination of the key for a keylock insert according to any of claims 1 to 7 and a parent part comprising:
a parent part bore, the parent part bore comprises an inner diameter wall, the inner diameter wall includes bore threads cut into the inner diameter wall;
the insert comprises an insert body having an exterior surface, the insert body being shaped cylindrically with a first end and second end opposite the first end; the insert comprises insert threads formed in the exterior surface; the insert threads are configured to match the bore threads of the parent part bore; the insert body comprises a slot receiver formed within the exterior surface, the slot receiver extends along the insert body from the first end to the second end;
the tang portion of the key being configured insertable within the slot receiver.

9. The combination according to claim 8, wherein the slot receiver comprises a dovetail shaped cross-section including a first width wider than a second width, the first width proximate a slot receiver floor formed in the slot receiver, the second width being narrowed proximate the exterior surface distally from the slot receiver floor; wherein the tang portion is configured to insert into the dovetail shaped cross-section.

10. The combination according to claim 8 or 9, wherein the first peak sloped sides and the second peak sloped sides allow for penetration of the double peak portion into the parent part bore; and/or
wherein the transition region sloped surface is configured to angle from the tang top surface upward toward the key aft end, the transition region being configured for the double peak portion to penetrate into the bore threads.

11. A process for forming a key for a keylock insert and a parent part comprising:
forming a parent part bore in the parent part, the parent part bore comprises an inner diameter wall, the inner diameter wall includes bore threads cut into the inner diameter wall;
forming the insert comprising an insert body having an exterior surface, the insert body being shaped cylindrically with a first end and second end opposite the first end; the insert comprises insert threads formed in the exterior surface; the insert threads are configured to match the bore threads of the parent part bore; forming a slot receiver within the exterior surface, the slot receiver extends along the insert body from the first end to the second end; and
forming a key body comprising a key forward end opposite a key aft end; the key body comprises a base side and an interference side opposite the base side; the key body comprises a first lateral side opposite a second lateral side relative to a key body centerline; the key comprises a tang portion proximate the key forward end, the tang portion being configured insertable within the slot receiver; the key comprises a double peak portion adjacent the tang portion and proximate the key aft end; the key comprises a transition region located between the tang portion and the double peak portion; configuring the transition region as a sloped surface; the double peak portion includes a first peak extending from the base side and a second peak adjacent the first peak relative to the key body centerline.

12. The process according to claim 11, further comprising:
forming the slot receiver as a dovetail shaped cross-section including a first width wider than a second width, the first width proximate a slot receiver floor formed in the slot receiver, the second width being narrowed proximate the exterior surface distally from the slot receiver floor; and
configuring the tang portion to insert into the dovetail shaped cross-section.

13. The process according to claim 11 or 12, further comprising:
forming the first peak with first peak sloped sides; configuring each of the first peak sloped sides to converge to a first peak surface;
forming the second peak with second peak sloped sides; configuring each of the second peak sloped sides to converge to a second peak surface; wherein the first peak sloped sides and the second peak sloped sides allow for penetration of the double peak portion into the parent part bore.

14. The process according to any of claims 11 to 13, further comprising:
configuring the transition region sloped surface to angle from the tang top surface upward toward the key aft end; and
configuring the transition region to guide the double peak portion to penetrate into the bore threads.

15. The process according to any of claims 11 to 14, further comprising:
forming the double peak portion with a valley section located between the first peak and the second peak, wherein the valley section is proximate the key body centerline; and/or
further comprising:
forming the double peak portion with a peak portion height extending from the base side to the interference side; configuring the peak portion height to penetrate the bore threads; and/or
wherein the key body comprises a hardness from 53 HRC to 56 HRC.
